# EUROPÄISCHE PATENTSCHRIFT

(11) **EP 1 470 521 B1**
(45) Veröffentlichungstag und Bekanntmachung des Hinweises auf die Patenterteilung: **12.10.2005**
(21) Anmeldenummer: 03734597.2
(22) Anmeldetag: 15.01.2003
(51) Int. Cl.: G06K 7/00, H04L 25/49

(54) **VERFAHREN ZUR ÜBERTRAGUNG VON DATEN**
METHOD FOR TRANSMITTING DATA
PROCEDE DE TRANSMISSION DE DONNEES

(30) Priorität: 01.02.2002 DE 10204347
(43) Veröffentlichungstag der Anmeldung: 27.10.2004
(73) Patentinhaber: ATMEL Germany GmbH, 74072 Heilbronn (DE)
(72) Erfinder: FRIEDRICH, Ulrich, 74248 Ellhofen (DE)
(86) Internationale Anmeldenummer: PCT/EP2003/000312
(87) Internationale Veröffentlichungsnummer: WO 2003/065284

(56) Entgegenhaltungen:
- EP-A- 0 542 229
- DE-A- 10 010 585
- US-A- 6 147 719
- US-B1- 6 212 230

## Beschreibung

Die vorliegende Erfindung betrifft ein Verfahren zur Übertragung von Daten, gemäß dem Oberbegriff des Patentanspruchs 1.

Ein derartiges Verfahren ist aus der Druckschrift DE 10138217.0 (P303529) bekannt. Hierbei werden zwischen einer Basisstation und einem Transponder Informationspakete übertragen. Die Informationspakete bestehen aus einem Kopfabschnitt und einem Mittelabschnitt mit einem Datenbereich. Mit den im Kopfabschnitt den Wertigkeiten der Informationssymbole zugeordneten Kennungen werden im Mittelabschnitt die Daten des Datenbereiches kodiert. Mit unterschiedlichen Kennungen von aufeinanderfolgenden Informationspaketen läßt sich die Datenrate einstellen. Nachteil des Verfahrens ist, daß bei Einsatz im Bereich UHF und höheren Frequenzen durch Reflexionen und oder Absorptionen störende Interferenzen bei der Kommunikation die Zuverlässigkeit der Datenübertragung verringern. Zur Korrektur der Lesefehler muß das gesamte Datenpaket wiederholt übertragen werden.

Ein weiteres Verfahren zur Übertragung von Daten ist in der Druckschrift DE 10121855.9.2 dargestellt. Hierbei wird unabhängig von den Wertigkeiten der Datenbits mit jedem neuen Bit in der Bitfolge des Datenwortes die Modulationsspannung zwischen zwei Werten gewechselt. Bei einer phasenmodulierten Trägerwelle ändert sich hierdurch die Phasenlage.

Ein weiteres Verfahren ist aus der Druckschrift EP 473 569 B1 bekannt. Hierbei werden mittels einer amplitudenmodulierten Trägerwelle digitale Daten zwischen einer Basisstation und einem passiven Transponder ausgetauscht. Die einzelnen Bits eines Datenwortes bestehen aus einer Zeitspanne, in der das elektromagnetische Feld eingeschaltet und einer Zeitspanne, in der das elektromagnetische Feld (Feldlücke) ausgeschaltet ist, wobei die Feldlücke als Separator zwischen zwei aufeinanderfolgenden Bits dient. Die Wertigkeit der Bits bestimmt sich aus der Länge der Zeit, in der das elektromagnetische Feld eingeschaltet ist. Für die Gesamtzeit zur Darstellung der einzelnen Bits wird der feste zeitliche Beitrag der Feldlücke hinzugezählt. Ferner wird bei dem passiven System aus dem Trägerfeld mittels Absorptionsmodulation die Energie für den Transponder gewonnen.

Durch die steigenden Sicherheitsanforderungen müssen in immer kürzeren Zeitspannen eine Vielzahl von Informationspaketen auf eine Trägerwelle moduliert werden. Zur Modulation wird vornehmlich die Amplitudenmodulation (ASK) eingesetzt. Um eine höhere Datenrate und eine höhere Reichweite zu erzielen, werden im Bereich der Transponder zunehmend Trägerfrequenzen im Bereich von UHF und Mikrowellen eingesetzt, wobei die unterschiedlichen nationalen HF-Vorschriften die Datenrate durch die Vorgabe der Frequenzbänder berücksichtigt werden müssen. Im UHF und Mikrowellenbereich finden vorwiegend ASK und Phasemodulationstechniken ihre Anwendung, wobei wegen der einfachen Implementierbarbeit in Verbindung mit CMOS ASK bevorzugt wird. Grundlage der bidirektionalen Datenübertragung zwischen Transponder und Basisstation bildet ein Datenprotokoll, das unter anderem die Anzahl der Informationssymbole wie beispielsweise die Wertigkeiten je Datenbit festlegt, sowie die Kennung der einzelnen Symbole definiert. Insbesondere im UHF Bereich entstehen bei der Datenübertragung durch Änderung der Übertragungsbedingungen infolge von Reflexionen und mit den damit verbundenen konstruktiven und destruktiven Interferenzen Lesefehler. Da dies eine nochmalige Übertragung des Datenwortes zur Folge hat, reduziert sich die effektive Datenrate erheblich.

Nachteil der bisherigen Verfahren ist, daß sich die Datenrate reduziert, sofern das Protokoll für die Datenübertragung unterschiedliche nationale Bestimmung erfüllt, da eine Anpassung an die schmalste Bandbreite erfolgt. Ferner wird die effektive Datenrate insbesondere im Bereich sehr hoher Frequenzen durch die schwankenden Übertragungsbedingungen reduziert. Die Reduzierung der Datenrate macht sich insbesondere bei zeitkritischen Anwendungen störend bemerkbar.
Aufgabe der vorliegenden Erfindung ist es, ein Verfahren zur Übertragung von Daten anzugeben, das die Zuverlässigkeit der Datenübertagung erhöht und einfach und kostengünstig durchführbar ist.

Diese Aufgabe wird erfindungsgemäß durch ein Verfahren der Eingangs genannten Art mit den Merkmalen des Patentanspruches 1 gelöst. Günstige Ausgestaltungsformen sind Gegenstand von Unteransprüchen.

Hiernach besteht das Wesen der Erfindung darin, daß bei einer kontaktlosen Datenübertragung mittels einer elektromagnetischen Welle die Änderung der Modulationszustände an festen Zeitpunkten erfolgt. Hierzu werden von einer Basisstation und einem Transponder der elektromagnetischen Welle Informationspakete aufmoduliert. Die Informationspakete weisen einen Kopfabschnitt mit einem Datensymbol und einen Datenabschnitt mit einem Datenwort auf, wobei das Datensymbol mehrere Wertigkeiten aufweist und mittels der Wertigkeiten die Daten des Datenabschnitts als eine Bitfolge des Datenwortes codiert und in durch aufeinanderfolgende Taktimpulse erzeugten Referenzintervalle übertragen werden. Hierzu wird im Kopfabschnitt zur Unterscheidung der Wertigkeiten des Datensymbols jeder Wertigkeit ein von der Zeitdauer des Referenzintervalls abgeleiteter Zeitpunkt zugeordnet und innerhalb des Referenzintervalls wenigstens ein Bit übertragen. Des Weiteren wird die Modulation der elektromagnetischen Welle an dem der Wertigkeit des Bits zugeordneten Zeitpunktes geändert.

Ein Vorteil des neuen Verfahrens ist, daß entsprechend den in dem Kopfabschnitt definierten Zeitpunkten im Datenwort zur Dekodierung der Daten das Datenwort nur zu bestimmten Zeitpunkten auf eine Änderung der Modulation untersucht wird. Insbesondere im UHF und Mikrowellen-Bereich werden Lesefehler zuverlässig unterdrückt und damit die Zuverlässigkeit der Datenübertragung wesentlich erhöht. Störende Interferenzen beispielsweise durch Reflexionen werden weitestgehend unterdrückt, da keine Integration der den Wertigkeiten zugeordneten Zeitintervallen erfolgen muß. Die bei den bisherigen Verfahren erforderliche Festlegung von Intervallbereichen und die damit verbundene zeitliche Länge der Intervalle in Abhängigkeit der Wertigkeit der Bits entfällt. Des Weiteren entfällt die Demodulation der Trägerwelle anhand der Integration der Zeitintervalle. Insbesondere bei einer Phasenmodulation läßt sich damit mittels deren Zuverlässigkeit die effektive Datenrate erhöhen. Ferner läßt sich durch eine Auswertung des Zeit- und des Frequenzbereiches der empfangenen Welle die Fehlerrate bei der Demodulation verringern. Hierbei ist die Änderungsrichtung der Modulation unerheblich, da es nur auf die Änderung zur einem vorgegeben Zeitpunkt ankommt. Ferner läßt sich die Baudrate einstellen und die Detektion der Modulationsänderung auf für das jeweilige Kommunikationssystem günstige Zeitpunkte abstimmen. Durch eine Änderung des Referenzintervalls lassen sich diese ebenso verändern als durch eine andere Wahl des Zeitpunktes selbst. Die Taktsignale lassen sich beispielsweise aus dem Systemtakt oder mittels eines Oszillator ableiten.

In einer Weiterbildung des Verfahrens werden innerhalb des Referenzintervalls zwei Bits übertragen. Hierzu wird die Modulation an dem der Wertigkeit des dem ersten Bit zugeordneten Zeitpunkt geändert und sofern das zweite Bit eine andere Wertigkeit aufweist, die Modulation bei der halben Zeitdauer des Referenzintervalls erneut geändert. Vorteilhaft ist, daß hierdurch die Datenrate wesentlich erhöht, da innerhalb eines Referenzintervalls die doppelte Anzahl von Bits übertragen wird.

In einer anderen Weiterbildung des Verfahrens beginnt bei der Übertragung des ersten Bits des Datenwortes die Modulation der elektrischen Welle mit einem vorgegebenen Modulationszustand. Vorteilhaft ist, daß durch den vorbestimmten Modulationszustand definiert ist, in weiche Richtung sich der Modulationszustand an dem der Wertigkeit des Bits zugeordneten Zeitpunktes ändert. Hierdurch lassen sich Veränderungen die sich auf Grund von Überlagerungen und Reflxionen ergeben und zu Invertierungen des empfangenen Signalzustandes führen auf einfache Weise korrigieren.

In einer Weiterbildung des Verfahrens wird zur Einstellung der Abstände der Seitenbänder zur Mittenfrequenz der modulierten elektromagnetischen Welle die Länge des Referenzintervalls verändert. Hierdurch lassen sich die Lagen der Seitenbänder auf einfache Weise an unterschiedliche nationale HF-Vorschriften anpassen. Da die Zeitpunkte an denen sich der Modulationszustand ändert als ein Teil des Zeitintervalls definiert sind, liegen die Fourierkomponenten der Zeitpunkte immer näher an der Mittenfrequenz der Trägerwelle als die Fourierkomponenten des Zeitintervalls selbst. Insbesondere bei einer Kollision in der Kommunikation ist die Basisstation in der Lage durch die Möglichkeit eines Spektrumsmanagements eine Kommunikationsblockade zu verhindern.

In einer anderen Weiterbildung des Verfahrens wird die Größe des Referenzintervalls aus der Größe des Zeitintervalls von zwei aufeinanderfolgenden Synchronisationssignalen bestimmt. Insbesondere bei einer synchronen Datenübertragung bei der die von dem Sender mitgelieferten Taktsignale im Empfänger zur Synchronisation oder beispielsweise zur Demodulation verwendet werden, läßt sich die Datenrate durch den Sender auf einfache Weise verändern. Hierdurch läßt sich die Datenrate an die Übertragungsbedingungen oder an die Systemeigenschaften des Empfängers anpassen. Ferner läßt sich bei passiven oder semipassiven Transpondem von der Basisstation durch eine Anpassung der Datenrate bei ungünstigen Übertragungsbedingungen die Energieaufnahme aus dem Feld positive beeinflussen.

Untersuchungen der Anmelderin haben gezeigt, daß es besonders vorteilhaft ist, in dem Transponder die von der Basisstation im Kopfabschnitt eines Informationspaketes übermittelten Zeitpunkte zur Dekodierung des Datenwortes in einem flüchtigem Speicher abzulegen. Hierdurch erübrigt sich in dem Transponder ein Festwertspeicher. Durch die erzielte Vereinfachung der integrierten Schaltung wird die Stromaufnahme reduziert und insbesondere bei passiven Transpondem die Kommunikationsreichweite erhöht.

In einer Weiterbildung des Verfahrens wird in dem Transponder zur Dekodierung des Datenwortes dem von der Basisstation übermittelten Zeitpunkt einem Wert eines Ladezustandes eines Kondensators (Peek-Detektor) zugeordnet. Hierbei ist die sogenannte RC-Zeit des Kondensators bekannt. Mittels eines Komparators der den übermittelten Wert der Ladezustands mit dem tatsächlichen Wert des Kondensators vergleicht, läßt sich die Kodierung oder Dekodierung exakt steuern, indem an dem gegebenen Zeitpunkt der Modulationszustand geändert bzw. der Modulationszustand detektiert wird.

Das erfindungsgemäße Verfahren soll nachfolgend anhand der Ausführungsbeispiele im Zusammenhang mit mehreren schematisierten Zeichnungen erläutert werden. Es zeigen, die
- Fig. 1a: eine Anordnung mit einer Basisstation und einem passiven Transponder, und
- Fig. 1b: der Aufbau eines Datenwortes, und
- Fig. 2a: ein von dem Transponder empfangenes Taktsignal aus dem ein Zeitintervall definiert wird , und
- Fig. 2b: ein zweiwertiger Datenstrom im Transponder zur Kodierung der elektromagnetischen Trägerwelle der Basisstation mit einem Bit je Zeitintervall, und
- Fig. 2c: das Modulationssignal zur Modulation der elektromagnetischen Welle, und
- Fig. 3a: ein von dem Transponder empfangenes zweites Taktsignal der Basisstation, und
- Fig. 3b: ein zweiwertiger Datenstrom im Transponder zur Kodierung der elektromagnetischen Trägerwelle der Basisstation mit zwei Bit je Zeitintervall, und
- Fig. 3c: das Modulationssignal zur Modulation der elektromagnetischen Welle.

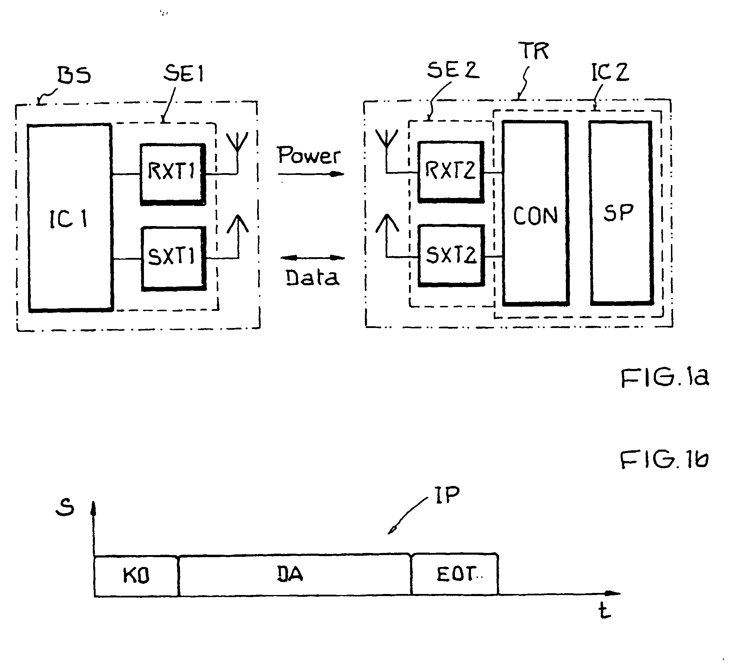

In Figur 1a ist eine Anordnung zur Datenübertragung zwischen einer Basisstation BS und einem passiven Transponder TR abgebildet. Hierbei entnimmt der Transponder TR seine Energie aus der Trägerwelle der Basisstation BS. Derartige Systeme werden unter anderem im Bereich des Kraftfahrzeug (KFZ) eingesetzt, wobei der Transponder im Türschlüssel und die Basisstation BS im Auto eingebaut ist. Die Basisstation BS weist einen integrierten Schaltkreis IC1 auf, der eine Sende- und Empfangseinheit SE1 mit einem Sendeteil RXT1 und einem Empfangsteil SXT1 steuert. Zur Übertragung von Daten sendet die Basisstation eine modulierte Trägerwelle aus, die von dem Transponder TR mittels einer Sende- und Empfangseinheit SE2, der einen Empfangsteil RXT2 und einen Sendeteil SXT2 aufweist, empfangen und zur Auswertung an eine Steuereinheit CON weitergeleitet wird, wobei die Sende- und Empfangseinheit SE2 außerdem die zur Versorgung des Transponders TR notwendige Energie absorbiert. Ferner besteht die integrierte Schaltung IC2 aus einer Steuereinheit CON und einer Speichereinheit SP, in der unter anderem die initialen Kenngrößen eines zur Datenübertragung von Informationspaketen verwendeten Protokolls abgelegt sind.

In Figur 1b ist ein schematisiertes Übertragungsprotokoll dargestellt. Hiernach besteht ein Informationspaket IP aus einem Kopfabschnitt KO, einem Datenbereich DA und einem EOT-Bereich. In dem Kopfabschnitt KO werden die Anzahl der Symbole und deren Kennung definiert. Des Weiteren lässt sich der Kopfabschnitt KO zur Synchronisation des Datenprotokolls verwenden. Mit der Kennung werden die zu übertragenden Daten im Datenbereich codiert. Mit dem EOT-Bereich wird über eine vorgegebene Kennung dem Empfänger das Ende des Informationspaketes mitgeteilt. In den weiteren Ausführungen wird das erfindungsgemäße Verfahren mittels einer synchronen Datenübertragung erläutert. Hierbei sendet die Basisstation BS zur Synchronisation der Datenübertragung Taktimpulse CLK aus. Die Taktimpulse CLK werden als Triggerimpulse für die Demodulation verwendet. Ferner wird im Transponder TR die Zeitdauer von zwei aufeinanderfolgenden Impulsen beispielsweise mittels eines internen Zählers, der sich vorzugsweise aus einem Systemtakt des Transponders TR ableitet, berechnet und als eine Referenzlänge verwendet. Erkennt der Transponder TR eine Datenübertragung, werden zu Beginn der Datenübertragung innerhalb der Steuereinheit CON die Protokollparameter aus dem Kopfabschnitt KO des ersten ankommenden Informationspakets IP extrahiert und beispielsweise mit den in der Speichereinheit SP vorgegebenen Protokollwerten verglichen.

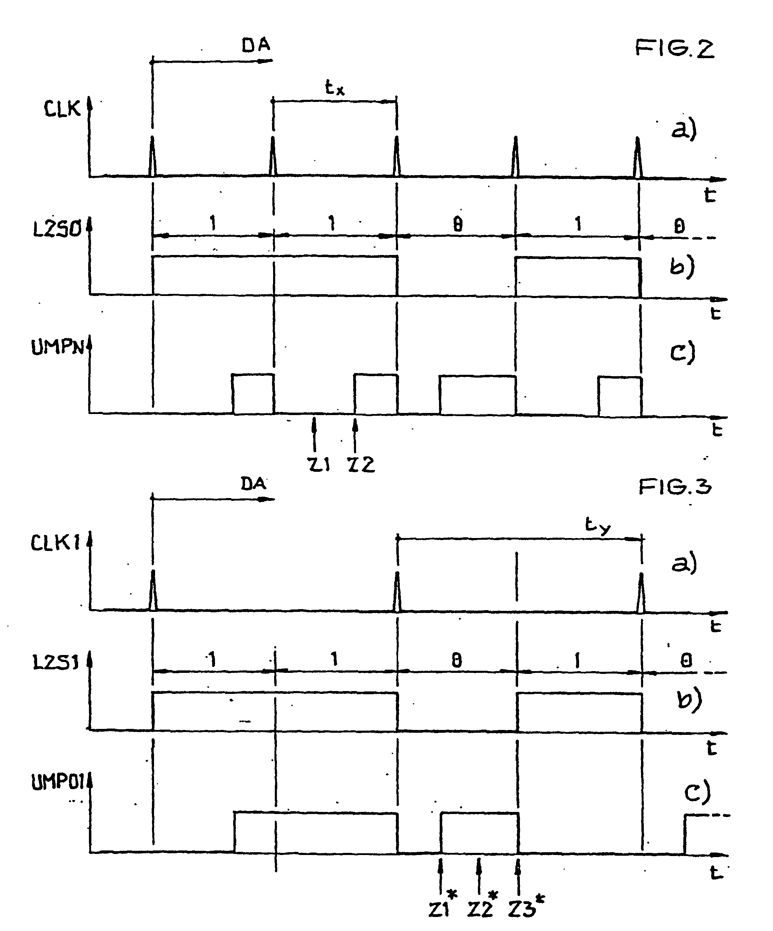

In Figur 2a-c sind schematisierte Signalverläufe im Transponder TR dargestellt, mittels denen die Zeitpunkte der Änderung des Modulationszustandes der elektromagnetischen Welle zur Übertragung einer gegebenen zweiwertigen Bitfolge eines Antwortsignals des Transponders TR an die Basisstation BS abgeleitet wird. Die Zeitpunkte werden im Kopfabschnitt KO des Informationspaketes von der Basisstation BS an den Transponder TR in Form von Bruchteile des aus zwei aufeinanderfolgenden Taktsignalen bestehenden Zeitintervalls Tx übersendet. In dem aufgeführten Beispiel wird der Wertigkeit "0" der Wert 1/3, der Wertigkeit "1" der Wert 2/3 des Zeitintervalls Tx zugeordnet.

In der Figur 2a ist das von dem Transponder TR empfangenes Taktsignal CLK der Basisstation BS dargestellt. Die Taktsignale CLK weisen einen gleichen Intervallzwischenraum auf. Aus zwei aufeinanderfolgenden Taktsignalen CLK definiert sich der Transponder ein Zeitintervall Tx.

In der Figur 2b ist ein Datenstrom L2S abgebildet, der von dem Transponder TR als Teil eines Datenwortes an die Basisstation BS zurückgesendet wird. Hierbei wird jedem Zeitintervall Tx genau ein Bit der Bitfolge zugeordnet.

In der Figur 2c ist der zeitliche Verlauf des Modulationszustandes UMPN dargestellt. Entsprechend der Wertigkeit des jeweiligen zu sendenden Bits, ändert sich der Modulationszustand innerhalb des Zeitintervalls Tx entweder an einem Zeitpunkt Z1, sofern eine logische Null vorliegt, oder an einem Zeitpunkt Z2, sofern eine logische Eins vorliegt. Hierbei liegt zu Beginn eines jeden Zeitintervalls Tx ein bestimmter konstanter Modulationszustand vor, d.h. die Richtung der Zustandsänderung der Modulation ist vorgegeben. Hierzu ist es Voraussetzung, daß am Ende eines jeden Zeitintervalls Tx der Modulationszustand auf den ursprünglichen Wert zurückgeändert wird.

In dem Ausführungsbeispiel der Figur 3a - c ist der zeitliche Verlauf der Signale für eine Übertragung von zwei Datenbits je Zeitintervall Ty dargestellt. Aufbauend auf den in Zusammenhang mit den Zeichnungsunterlagen von der Fig. 2a- c gemachten Erläuterungen werden im Folgenden nur die Unterschiede aufgezeigt.

In der Fig. 3a wird aus Gründen der Übersichtlichkeit die Zeitachse t gedehnt. Die Zeitintervalle Ty, die sich aus jeweils zwei aufeinanderfolgenden Taktimpulsen CLK1 ergeben, sind in der Fig. 3b, in dem die zusendende Bitfolge LS21 dargestellt, zwei Datenbits je Zeitintervall Ty zugeordnet. In der Fig. 3c ist der zeitliche Verlauf der Änderung des Modulationszustandes dargestellt. Hierbei ändert sich der Modulationszustand bei einer logischen Eins bei einem Zeitpunkt Z2*, der sich als 2/3 aus der Hälfte der Dauer des Zeitintervalls Ty und bei einer logischen Null bei einem Zeitpunkt Z1*, der sich als 1/3 aus der Hälfte der Dauer des Zeitintervalls Ty ergibt. Weisen innerhalb eines Zeitintervalls die beiden zu übertragenden Bits die gleiche Wertigkeit auf, wird der Modulationszustand in der Mitte des Intervalls nicht geändert. Weisen die beiden Bits eine unterschiedliche Wertigkeit auf, wird an einem Zeitpunkt Z3*, der der Mitte des Intervalls Ty entspricht der Modulationszustand geändert.

Ein Vorteil des Verfahrens ist es, daß es für unterschiedliche Modulationsverfahren wie PSK, ASK, FSK oder Mischverfahren verwendet werden kann. Durch die Änderung der Modulation zu definierten Zeitpunkten in eine vorgegebene Richtung lassen sich Bitfehler die insbesondere bei Frequenzen im UHF Bereich auftreten bereits während der Übertragung eines Datenwortes korrigieren. Hierbei läßt sich die "online"-Korrektur durch den Prüfbereich (CRC) kontrollieren. Durch die Korrektur wird die Zuverlässigkeit der Datenübertragung wesentlich gesteigert und die effektive Datenrate erhöht.

## Patentansprüche

1. Verfahren zur Übertragung von Daten zwischen einer Basisstation (BS) und einem Transponder (TR) mittels einer elektromagnetischen Welle, bei dem auf die elektromagnetische Welle Informationspakete (IP) aufmoduliert werden, welche einen Kopfabschnitt (KO) mit einem Datensymbol und einen Datenabschnitt (DA) mit einem Datenwort aufweisen, wobei das Datensymbol mehrere Wertigkeiten aufweist und mittels den Wertigkeiten die Daten des Datenabschnitts (DA) als eine Bitfolge des Datenwortes codiert und in durch aufeinanderfolgende Taktimpulse erzeugten Referenzintervalle (Tx; Ty) übertragen werden,
**dadurch gekennzeichnet, daß**
• im Kopfabschnitt (KO) zur Unterscheidung der Wertigkeiten des Datensymbols jeder Wertigkeit ein von der Zeitdauer des Referenzintervalls (Tx; Ty) abgeleiteter Zeitpunkt (Z1, Z2, Z1*-Z3*) zugeordnet wird, und
• innerhalb des Referenzintervalls (Tx, Ty) wenigstens ein Bit übertragen wird, und
• die Modulation der elektromagnetischen Welle an dem der Wertigkeit des Bits zugeordneten Zeitpunktes (Z1, Z2, Z1*-Z3*) geändert wird.

2. Verfahren nach Anspruch 1, **dadurch gekennzeichnet, dass** innerhalb des Referenzintervalls (Ty) zwei Bits übertragen werden und die Modulation an dem der Wertigkeit des dem ersten Bit zugeordneten Zeitpunkt (Z1*, Z2*) geändert wird und sofern das zweite Bit eine andere Wertigkeit aufweist, die Modulation bei der halben Zeitdauer des Referenzintervalls (Ty) geändert wird.

3. Verfahren nach Anspruch 1 oder Anspruch 2, **dadurch gekennzeichnet, dass** bei der Übertragung des ersten Bits des Datenwortes die Modulation der elektrischen Welle mit einem vorgegebenen Modulationszustand beginnt.

4. Verfahren nach einem der Ansprüche 1 bis 3, **dadurch gekennzeichnet, dass** das die Größe des Referenzintervalls aus der Größe des Zeitintervalls von zwei aufeinanderfolgenden Synchronisationssignalen bestimmt wird.

5. Verfahren nach einem der Ansprüche 1 bis 4, **dadurch gekennzeichnet, dass** in dem Transponder (TR) die von der Basisstation (BS) im Kopfabschnitt (KO) eines Informationspaketes (IP) übermittelten Zeitpunkte zur Dekodierung des Datenwortes in einem flüchtigem Speicher abgelegt werden.

6. Verfahren nach einem der Ansprüche 1 bis 5, **dadurch gekennzeichnet, dass** in dem Transponder (TR) zur Dekodierung des Datenwortes dem von der Basisstation übermittelten Zeitpunkt (Z1, Z2, Z1*-Z3*) einem Wert eines Ladezustandes eines Kondensators zugeordnet wird.

7. Verfahren nach einem der Ansprüche 1 bis 6, **dadurch gekennzeichnet, dass** zur Einstellung der Abstände der Seitenbänder zur Mittenfrequenz der modulierten elektromagnetischen Welle die Länge des Referenzintervalls (Tx, Ty) verändert wird.

## Claims

1. Method of transmitting data between a base station (BS) and a transponder (TR) by means of an electromagnetic wave, in which information packets (IP) are modulated on the electromagnetic wave, the information packets having a head section (KO) with a data symbol and a data section (DA) with a data word, wherein the data symbol has several significances and by means of the significances the data of the data section (DA) are coded as a bit sequence of the data word and transmitted in reference intervals (Tx; Ty) produced by successive signal pulses, **characterised in that**
- for distinction of the significances of the data symbol a time instant (Z1, Z2; Z1* - Z3*) derived from the time period of the reference symbol (Tx; Ty) is associated with each significance in the head section (KO),
- at least one bit is transmitted within the reference interval (Tx, Ty) and
- the modulation of the electromagnetic wave is changed at the time instant (Z1, Z2; Z1* - Z3*) associated with the significance of the bit.

2. Method according to claim 1, **characterised in that** two bits are transmitted within the reference interval (Ty) and the modulation is changed at the time instant (Z1, Z2; Z1* - Z3*) associated with the significance of the first bit and insofar as the second bit has a different significance the modulation is changed at half the time period of the reference interval (Ty).

3. Method according to claim 1 or claim 2, **characterised in that** in the case of transmission of the first bit of the data word the modulation of the electric wave begins with a predetermined modulation state.

4. Method according to one of claims 1 to 3, **characterised in that** the size of the reference interval is determined from the size of the time interval of two successive synchronisation signals.

5. Method according to one of claims 1 to 4, **characterised in that** in the transponder (TR) the time instants, which are transmitted by the base station (BS) in the head section (KO) of an information packet (IP), are, for decoding of the data word, filed in a volatile memory.

6. Method according to one of claims 1 to 5, **characterised in that** in the transponder (TR) a value of a charge state of a capacitor is, for decoding of the data word, associated with the time instant (Z1, Z2; Z1* - Z3*) communicated by the base station.

7. Method according to one of claims 1 to 6, **characterised in that** the length of the reference interval (Tx, Ty) is varied for setting the spacings of the sidebands with respect to the centre frequency of the modulated electromagnetic wave.

## Revendications

1. Procédé de transmission de données entre une station de base (BS) et un transpondeur (TR) au moyen d'une onde électromagnétique, dans lequel on module cette onde électromagnétique par des paquets d'informations (IP), présentant un en-tête (KO) comprenant un symbole de données et une zone de données (DA) comprenant un mot de données numériques, le symbole de données présentant plusieurs valences, et dans lequel les données de la zone de données (DA) sont codées au moyen des valences comme une série de bits du mot de données numériques et sont transmises dans des intervalles de référence (Tx; Ty) générés par des impulsions d'horloge consécutives,
**caractérisé en ce que** :
• dans l'en-tête (KO), pour distinguer les valences du symbole de données, on assigne à chaque valence un instant (Z1,Z2; Z1*-Z3*) dérivé de la durée de l'intervalle de référence (Tx; Ty),
• au moins un bit est transmis dans l'intervalle de référence (Tx; Ty), et
• l'on modifie la modulation de l'onde électromagnétique à l'instant (Z1,Z2; Z1*-Z3*) associé à la valence du bit.

2. Procédé selon la revendication 1, **caractérisé en ce que** deux bits sont transmis dans l'intervalle de référence (Ty), **en ce que** l'on modifie la modulation à l'instant (Z1*, Z2*) associé à la valence du premier bit, et, dans la mesure où le deuxième bit présente une autre valence, **en ce que** l'on modifie la modulation à la moitié de la durée de l'intervalle de référence (Ty).

3. Procédé selon la revendication 1 ou 2, **caractérisé en ce que** lors de la transmission du premier bit du mot de données numériques, la modulation de l'onde électrique commence à un état de modulation prédéfini.

4. Procédé selon l'une quelconque des revendications 1 à 3, **caractérisé en ce que** la largeur de l'intervalle de référence est définie à partir de la largeur de l'intervalle de temps entre deux signaux de synchronisation consécutifs.

5. Procédé selon l'une quelconque des revendications 1 à 4, **caractérisé en ce que** dans le transpondeur (TR), les instants transmis par la station de base (BS) dans l'en-tête (KO) d'un paquet d'informations (IP) pour décoder le mot de données numériques sont placés dans une mémoire volatile.

6. Procédé selon l'une quelconque des revendications 1 à 5, **caractérisé en ce que** dans le transpondeur (TR) on assigne une valeur d'un état de chargement d'un condensateur à l'instant (Z1,Z2; Z1*-Z3*) transmis par la station de base pour décoder le mot de données numériques.

7. Procédé selon l'une quelconque des revendications 1 à 6, **caractérisé en ce que** pour régler les distances des bandes latérales à la fréquence médiane de l'onde électromagnétique modulée, on modifie la longueur de l'intervalle de référence (Tx; Ty).
